# EUROPEAN PATENT SPECIFICATION

(11) **EP 3 846 294 B1**
(45) Date of publication and mention of the grant of the patent: **10.09.2025**
(21) Application number: 20150115.2
(22) Date of filing: 02.01.2020
(51) Int. Cl.: H01R 13/66, H01R 13/713, B60L 3/04, G01K 1/14, H01R 24/30

(54) **TERMINAL ASSEMBLY FOR A CHARGING CONNECTOR INCLUDING AN IMPROVED THERMAL MONITORING**
ANSCHLUSSANORDNUNG FÜR EINEN LADEVERBINDER EINSCHLIESSLICH EINER VERBESSERTEN WÄRMEÜBERWACHUNG
ENSEMBLE DE TERMINAL POUR UN CONNECTEUR DE CHARGE COMPRENANT UNE SURVEILLANCE THERMIQUE AMÉLIORÉE

(43) Date of publication of application: 07.07.2021
(73) Proprietor: Aptiv Technologies AG, 8200 Schaffhausen (CH)
(72) Inventor: LESNIAK, Pawel, 30-376 Kraków (PL); ZIEMBA, Robert, 30-384 Kraków (PL); MLECZKO, Marek, 30-868 Kraków (PL); KAWALEC, Dominik, 32-084 Morawica (PL); JEDLINSKI, Tomasz, 31-348 Krakow (PL)
(74) Representative: INNOV-GROUP

(56) References cited:
- EP-A1- 3 528 349
- WO-A1-2018/192805
- DE-A1- 102015 004 313
- DE-A1- 102016 107 401
- US-A1- 2019 293 493

## Description

### TECHNICAL FIELD

The present disclosure relates to a terminal assembly for a charging connector intended for connection to a mating charging connector, including an improved thermal monitoring, and a method for manufacturing such a terminal assembly.

### BACKGROUND

A charging connector can be a charging socket or a charging plug. It can be used in particular for charging a motor vehicle driven by an electric motor. Such a vehicle is referred as an "electric vehicle" in the present disclosure.

A charging connector of this type is designed to transmit high charging currents, which may result in a high thermal power dissipation. For safety reasons, it is required to monitor the temperature of the charging connector in order to detect any overheating. In case that an important rise of temperature of the charging connector is detected, the charging current can be reduced or even switched off.

EP 3 286 804 A1 discloses a plug-in connector part, also referred as a charging connector, comprising a temperature monitoring device having a support element, that can be formed as a printed circuit board, and a thermal sensor (or thermistor) mounted on the support element. The support element is provided with at least one opening through which an electrical contact element for transmitting electrical current (also called a "terminal" or "pin") extends. A metal contact surface is arranged at the opening so that the terminal is thermally coupled to the contact surface. In addition, a coupling portion is used to thermally couple the thermal sensor with the opening and therefore with the terminal extending through the opening. The coupling portion is connected to the metal contact surface and extends over the entire surface of the temperature-monitoring device, inside the support element.

In the charging connector known from EP 3 286 804 A1, in case of a rise in temperature of the terminal, the heat is conducted from the terminal to the thermal sensor by traveling via the metal contact surface, the coupling portion and the support element. As a result, the rise in temperature of the terminal is transmitted to the thermal sensor with a certain time delay. It is important that this time delay be short to allow for a quick reaction of either reducing the charging current or switching off the charging connector in case of an overheating of the terminal. Documents DE 10 2015 004313 A1 and US 2019/293493 A1 disclose terminal assemblies according to the preamble of independent claim 1.

There is a need to improve the situation. More precisely, there is a need to shorten the time delay for detecting an overheating of the terminal(s) in the charging connector.

### SUMMARY

The present disclosure concerns a terminal assembly for a charging connector according to independent claim 1.

Such a configuration of the terminal assembly allows to monitor the temperature of the terminal(s) and quickly detect an excessive rise in temperature, in order to take appropriate countermeasures, for example reducing the charging current or switching off the charging current. The heat generated by each terminal flows rapidly from the terminal to a corresponding thermal sensor through the thermal interface material in which the sensor is immersed.

The terminal assembly comprises according to the invention a housing element for holding the N terminals and each of the N thermal sensors is immersed in the thermal interface material filling a container provided by an inner surface of a hole in the housing element, the first surface of the support element and said corresponding contact surface.

According to the invention, said corresponding contact surface is formed by a surface area of said corresponding terminal. According to the invention, said hole in the housing element is a through hole and the corresponding contact surface of the terminal is surrounded by an edge of an opening of the through hole. With such a configuration, the heat flow goes from the terminal to the thermal sensor, through the thermal interface material, which allows a very fast detection of a rise in temperature of the terminal.

Advantageously, each of the N thermal sensors is disposed in front of said surface area of the corresponding terminal forming said corresponding contact surface. This allows a heat transfer in straight line from the terminal to the corresponding thermal sensor.

The thermal interface material filling said container can comprise a first layer in contact with said corresponding contact surface and a second layer in contact with the first surface of the support element, and the inner surface of the hole is configured so that the second layer is larger than the first layer.

In a second embodiment which does not form part of the invention as claimed, said corresponding contact surface is part of a lamella metal spring that is in contact with said corresponding terminal. With such a configuration, the heat generated by a terminal is transferred to a corresponding thermal sensor through said lamella metal spring and the thermal interface material. The use of lamella metal springs is advantageous in a terminal assembly having one or more terminals that are not stably assembled to the housing element.

The lamella metal spring can comprise a body part that is sandwiched between the thermal interface material and a surface at a bottom of said hole in the housing element, and an arm part that extends from the body part towards an end part that is in contact with the corresponding terminal.

Advantageously, the arm part of the lamella metal spring is in contact with the thermal interface material. In other words, the arm part has a surface that is in contact with the thermal interface material. Such a configuration improves the heat transfer from the terminal to the corresponding thermal sensor, since a larger surface of the lamella metal spring is in contact with the thermal interface material.

The thermal conductivity of the thermal interface material is advantageously equal with or superior to 1 W / m-K.

In case of a DC (Direct Current) charging connector, the terminal assembly can comprise two terminals (N=2).

In case of a AC (Alternating Current) charging connector, the terminal assembly can comprise four terminals (N=4).

The number N of terminals is equal to the number M of thermal sensors. Thus, the terminal assembly can comprise a plurality of N terminals for transmitting the charging current and the temperature monitoring device can comprise N respective thermal sensors that are immersed in the thermal interface material. For example, the thermal interface material fills N containers provided by the inner surface of N respective holes, N contact surfaces that are respectively thermally coupled with the N terminals and the first surface of the support element.

The present disclosure also concerns:
- a charging connector comprising the above defined terminal assembly;
- an electric vehicle integrating said charging connector;
- a charging station integrating said charging connector.

A method for manufacturing a terminal assembly for a charging connector is also provided according to independent claim 6.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1A shows a perspective view of a terminal assembly for a charging connector, according to a first exemplary embodiment.
Figure 1B shows the perspective view of figure 1A, in which some elements are represented semi-transparently to better show the structure of the terminal assembly.
Figure 2 shows a support element, supporting two thermal sensors, comprised in the terminal assembly of the first exemplary embodiment.
Figures 3A, 3B and 3C show the terminal assembly of the first exemplary embodiment during manufacturing, and illustrate three successive steps of manufacturing.
Figure 4 shows a cut perspective view of the terminal assembly of the first exemplary embodiment.
Figure 5 shows schematically a heat flow from one terminal to an associated thermal sensor in the terminal assembly of the first exemplary embodiment.
Figures 6A to 6E show the terminal assembly according to a second exemplary embodiment which does not form part of the invention as claimed, during manufacturing and illustrate successive steps of manufacturing.
Figure 7 shows a support element of the terminal assembly of the second embodiment.
Figure 8 shows a cut perspective view of the terminal assembly shown in figure 6E.
Figure 9 is an enlarged view of a part of the cut perspective view of figure 8, showing more precisely the heat flow from the terminal to the thermal sensor.

### DETAILED DESCRIPTION

A vehicle driven by an electric motor, also referred as an electric vehicle, comprises electric batteries to supply electrical power to the electric motor. The electric batteries can be electrically charged at a charging station. The vehicle can be connected to the charging station with a charging cable having two charging plugs at both ends. The first charging plug of the charging cable is plugged into a charging connector in the form of a charging socket on the vehicle, also referred as a "charging inlet". The second charging plug of the charging cable is plugged into a charging connector in the form of a charging socket on the charging station, also referred as a "charging outlet". When the electric batteries of the vehicle are being electrically charged, a charging current is transmitted from the charging station to the vehicle via the charging cable.

In the present disclosure, the terms "charging connector" may refer to a charging inlet on a vehicle, or a charging outlet on a charging station, or a charging plug on a charging cable. The charging connector may be used to charge electric devices other than electric vehicle.

A charging connector has a terminal assembly. The terminal assembly has a number of N terminals for transmitting a charging current, with N≥2, , and a temperature monitoring device. According to the invention, the terminal assembly has also a housing element for holding the N terminals.

A terminal may also be referred as a "pin" or a "contact element". The function of a terminal is to transmit a charging current. Since the charging currents can be high, the temperature of a terminal may rise and cause an overheating of the components of the charging connector. Therefore, it is necessary to monitor the temperature of the N terminals and to be able to quickly detect an excessive rise in temperature of at least one terminal, in order to reduce or switch off the charging current before any damage to the components.

The temperature monitoring device performs temperature monitoring in order to detect an excessive rise in temperature of one or more terminals and, if an excessive rise of temperature is detected, the charging current can be reduced or switched off. The temperature monitoring device has a support element and N thermal sensors, for monitoring the temperature of the N terminals. The N thermal sensors are mounted on a first surface of the support element. The support element is for example a printed circuit board.

In the terminal assembly, the N terminals and the temperature monitoring device are assembled with the housing element.

The housing element has one or more holes for receiving a thermal interface material.

A thermal interface material is a material that is usually inserted between two components in order to enhance the thermal coupling between them. The thermal interface material is thermally conductive. The thermal conductivity of the thermal interface material is advantageously equal with or superior to 1 W / m-K. It can be a liquid dispensed material that will cure at room temperature or with the addition of heat. The thermal interface material can be a liquid gap filling material, for example the product referenced as "BERGQUIST^{®} GAP FILLER TGF 4000" manufactured by Henkel company. In addition, the thermal interface material is an electrically insulating material, advantageously a dielectric material.

Each of the N thermal sensors is immersed in the thermal interface material that fills a space between the first surface of the support element and a corresponding contact surface that is thermally coupled with a corresponding terminal (of the N terminals). In this way, said thermal sensor and the corresponding terminal are thermally coupled by the thermal interface material and the corresponding contact surface.

Each of the N thermal sensors is immersed in the thermal interface material filling a corresponding container. More precisely, said container receiving the thermal sensor is formed by the surfaces including an inner surface of a hole in the housing element, the first surface of the support element, and the corresponding contact surface that is thermally coupled with the corresponding terminal. In other words, the space filled with the thermal interface material is inside a container made by an inner surface of a hole in the housing element, the first surface of the support element (the one supporting the at least two thermal sensors) and the contact surface.

As previously indicated, each of the N thermal sensors is immersed in the thermal interface material that fills a space between the first surface of the support element and a corresponding contact surface that is thermally coupled with a corresponding terminal (of the N terminals). According to the invention, said corresponding contact surface is formed by a surface area of the corresponding terminal. According to the invention, this surface area of the corresponding terminal is surrounded by an edge of one opening of a through hole in the housing element. In a second exemplary embodiment, which does not form part of the invention as claimed, said corresponding contact surface is formed by a lamella metal spring that is in contact with the corresponding terminal.

The number N of terminals is for example equal to the number of thermal sensors. In such a case, one thermal sensor monitors one terminal.

In case of DC (Direct Current) charging, the number N of terminals can be two. In case of AC (Alternating Current) charging, the number N of terminals can be four.

A method for manufacturing a terminal assembly for a charging connector,, such as the above described terminal assembly, comprises the steps of
- providing a number N of terminals for transmitting a charging current, with N≥1;
- providing a temperature monitoring device comprising a support element and a number N of thermal sensors for monitoring the temperature of the N terminals, said N thermal sensors being mounted on a first surface of said support element; and
- providing a housing element for holding the N terminals,

Furthermore, the method comprises a step of dispensing a thermal interface material, in liquid state, in the housing element on respective contact surfaces intended to be thermally coupled with the N terminals. When the thermal interface material is still in liquid state, the N thermal sensors are immersed in the thermal interface material by putting the support element, which first surface faces downwards, on a top surface of the liquid. Then, the thermal interface material is cured.

According to the invention, the N terminals and the housing element are assembled prior to the step of dispensing the thermal interface material. Then, in the step of dispensing, the thermal interface material is dispensed on respective contact surfaces, formed by respective surface areas of the M terminals, through holes in the housing element.

In a second exemplary embodiment, which does not form part of the invention as claimed, M lamella metal springs are mounted into holes in the housing element, prior to the step of dispensing the thermal interface material. In the step of dispensing, the thermal interface material covers a surface of each of the M lamella metal springs. Then, after the steps of dispensing the thermal interface material and immersing the M thermal sensors in the thermal interface material, the N terminals and the housing element are assembled. In assembling the N terminals and the housing element, each of the M lamella metal springs is put in contact with a corresponding terminal of the M terminals.

The at least one terminal, the temperature monitoring device and the housing element are assembled in order to form the terminal assembly. Different methods of assembling can be used.

The terminal assembly and the method for manufacturing the terminal assembly will now be described in more detail with reference to the figures that represent a first and second exemplary embodiments.

The same, analogous or corresponding elements represented in the different figures have the same references, unless otherwise stated.

### First Exemplary Embodiment

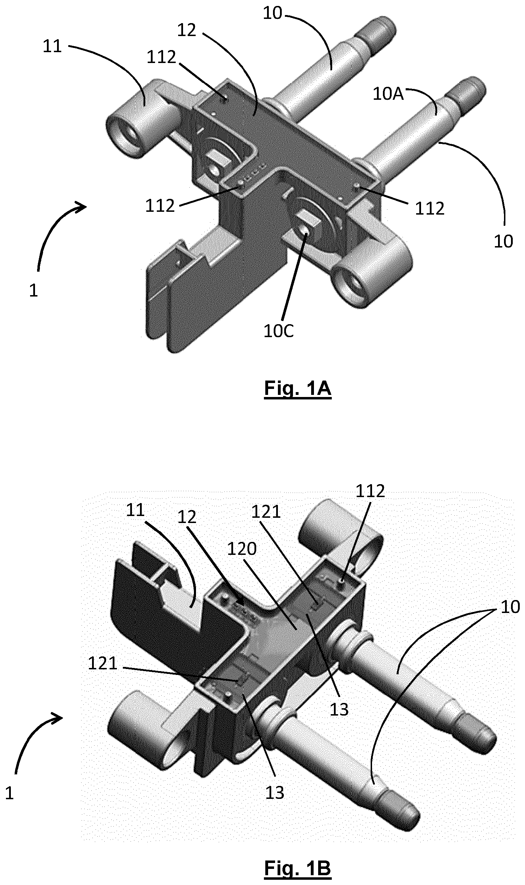

Figures 1A and 1B show a first exemplary embodiment of a terminal assembly 1 for a charging connector, for example the charging connector on the vehicle. Figure 1B is analogous to figure 1A but shows some of the structural elements of the terminal assembly 1 of figure 1A in semitransparency, in order to facilitate the understanding of the structure of the terminal assembly 1.

In the first exemplary embodiment, the terminal assembly 1 has two terminals 10 (N=2), for transmitting a charging current, a housing element 11 and a temperature monitoring device 12. This terminal assembly 1 of the first exemplary embodiment is suitable for a DC (Direct Current) charging connector.

The temperature monitoring device 12 has a support element 120 and two thermal sensors 121 (N=2) for detecting a rise in temperature of the two respective terminals 10. The support element 120 can be formed by a printed circuit board that has a first surface 122 on which the two thermal sensors 121 are mounted. The printed circuit board 120 is made of an electrically insulating material and supports electrical conducting tracks (non represented).

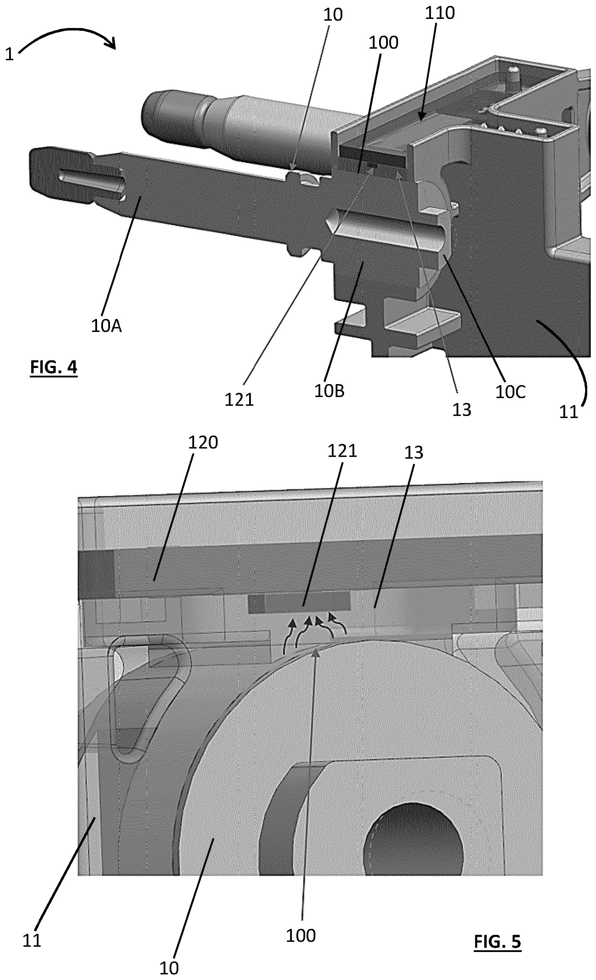

The housing element 11 holds the two terminals 10. The two terminals extend along two parallel axis and have for example a circular cross section. The terminals may have any other shape. Each terminal 10 projects from the housing element 11 by means of a first end 10A, and is held by the housing element 11 by means of a shank portion 10B that is next to a second end 10C, opposite to the first end 10A, as shown in figure 4. The second end 10C is intended to make electrical contact with a conductor element of the charging connector integrating the terminal assembly 1. The first end 10A is intended to make electrical contact with a conductor element of a mating charging connector to which said charging connector is connected.

The housing element 11 can be made of a plastic material. It can be over-molded on the two terminals 10.

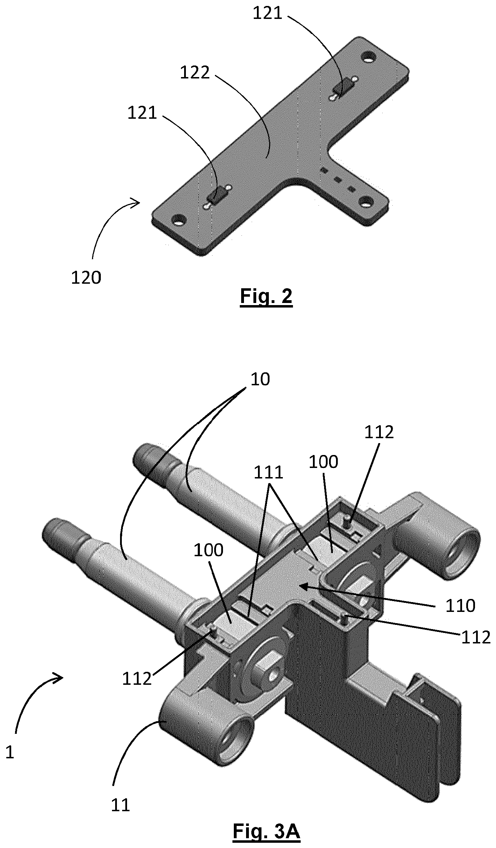

The housing element 11 has an insertion part 110, that can be viewed for example in figure 3A, in which the temperature monitoring device 12 is inserted.

The housing element 11 has two holes 111, that can be viewed in figure 3A. These holes 111 are provided through a bottom wall of the insertion part 110. This bottom wall is over-molded on the shank portions 10B of the two terminals 10. Therefore, each through hole 111 has an opening (the lower opening in figure 3A) which edge is in contact with the shank portion 10B of the corresponding terminal 10 and surrounds a surface area 100 of the terminal 10. Each hole 111 forms like a window between the terminal 10 (more precisely the surface area 100 of the shank portion 10B) and the inside of the insertion part 110 of the housing element 11.

The support element 120 has an external shape that fits the inside of the insertion part 110, as shown in figures 1A, 1B and 2. The support element 120 is inserted in the insertion part 110 and disposed at the bottom of the insertion part 110, the first surface of the support element 120 (the one supporting the thermal sensors 121) being oriented towards the bottom of the insertion part 110.

In the present exemplary embodiment, the housing element 11 has a plurality of fixing pins 112 protruding on a surface at the bottom of the insertion part 110. These fixing pins 112 are inserted into corresponding holes provided through the support element 120, in order to facilitate assembling the housing element 111 and the support element 120.

A container is formed by the inner surface of each hole 111 in the housing element 11, the first surface of the support element 120 (the one supporting the thermal sensors), and a contact surface consisting of the surface area 100 of the corresponding terminal 10. As shown in figure 4, the inside of the container is filled with a thermal interface material 13 and the corresponding thermal sensor 121 is immersed in the thermal interface material 13. The thermal sensor 121 is advantageously disposed in front of the surface area 100 of the terminal.

As a result, each thermal sensor 121 is thermally coupled with the corresponding terminal 10 by the thermal interface material 13 and the contact surface 100. As represented in figure 5, when the terminal 10 generates heat, the heat flow goes directly from the surface area 100 of the terminal 10 to the thermal sensor 121, through the thermal interface material 13.

The holes 111 have for example a rectangular shape in a plane that is parallel to the bottom surface of the insertion part 110.

The holes 111 can be enlarged next to the bottom surface of the insertion part 110. The inner surface of each hole is thus configured so that the thermal interface material 13 filling the container comprises a first layer in contact with the contact surface 100 of the terminal 10 and a second layer in contact with the first surface of the support element 120, the second layer being larger than the first layer. In a DC section that is a high voltage section, such a second layer allows to fulfil the requirement of a creepage distance.

A first exemplary embodiment of the method for manufacturing the terminal assembly will now be describe with reference to figures 3A to 3C.

In a first step (figure 3A), the two terminals 10 and the housing element 11 are assembled, so as to form a first assembly as represented in figure 3A. For example, the housing element 11 is overmolded on the two terminals 10. The housing element 11 and the two terminals 10 are here stably assembled.

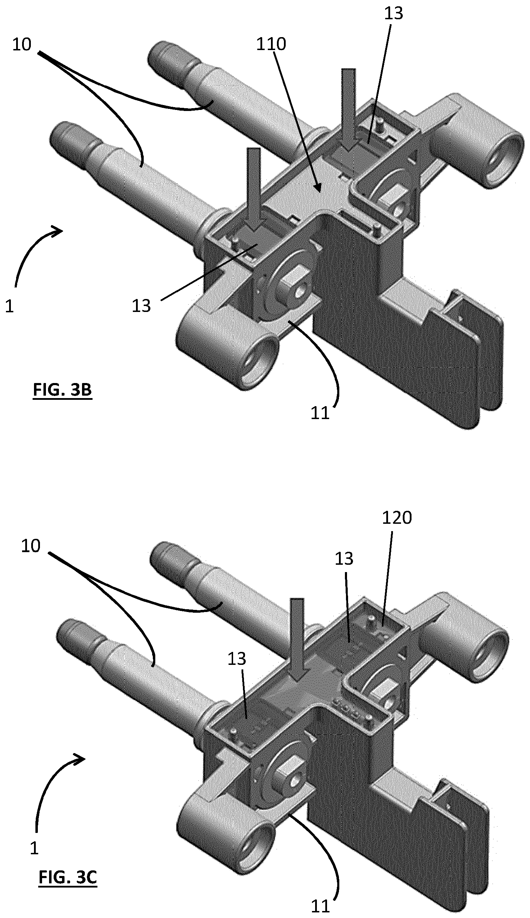

In a second step (figure 3B), the thermal interface material 13 in liquid state is dispensed in each container formed by the inner surface of each hole 111 and the contact surface 100 of the corresponding terminal 10. The arrows oriented downwards represent the operation of dispensing the thermal interface material 13. Each container is filled with the thermal interface material 13 in liquid state up to the point that the top surface of the liquid reaches the surface at the bottom of the insertion part 110.

In a third step (figure 3C), when the thermal interface material 13 is still in liquid state, each thermal sensor 121 is immersed in the thermal interface material 13. The immersion is performed by putting the support element 120, which first surface (the one supporting the thermal sensors 121) faces downwards, on the top surface of the liquid (i.e. the thermal interface material in liquid state). In figure 3C, the top surface of the thermal interface material in each container is shown in transparency through the support element 120 (in reality, the thermal interface material is under the support element 120). In the third step, the support element 120 is inserted into the insertion part 110 and put on the bottom of said insertion part 110, so that the first surface of the support element 120 is also put on the top surface of the liquid thermal interface material 13 previously dispensed in the containers. By doing so, the thermal sensors 121, positioned appropriately on the first surface 122 of the support element 120, are immersed in the liquid thermal interface material 13.

The thermal sensors 121, immersed in the thermal interface material 13, face the respective contact surfaces 100 of the terminals 10.

In a fourth step, the thermal interface material 13 is cured. For example, it is cured at room temperature or with the addition of heat.

After curing, the thermal interface material 13 allows to stably assemble the support element 120 with the first assembly.

The main function of the thermal interface material 13 is to transfer the heat generated by the terminals 10 to the thermal sensors 121. Figure 5 illustrates the heat flow (represented by four arrows oriented upwards) between one of the terminals 10 and the associated thermal sensor 121. The heat generated by the terminal 10 goes through the surface contact 100 of the terminal 10 and is transferred directly to the thermal sensor 121 through the thermal interface material 13. As the thermal sensor 121 faces the contact surface 100, the path between the terminal 10 and the thermal sensor 121 through the thermal interface material 13 is very short. With such a configuration, the thermal sensor 121 can detect very quickly a rise in temperature of the terminal 10.

### Second Exemplary Embodiment

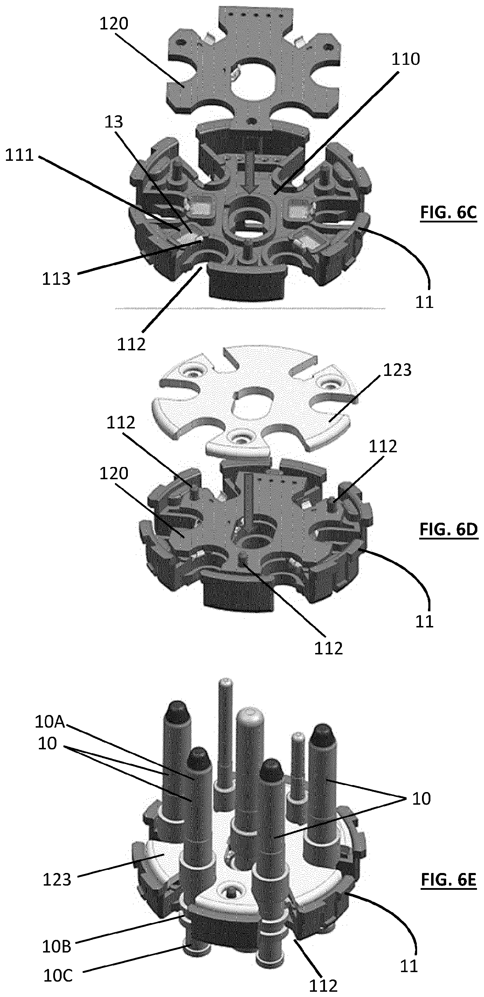

Figure 6E shows a second exemplary embodiment of a terminal assembly 1 for a charging connector, this embodiment does not form part of the invention as claimed, for example the charging connector on the vehicle.

In this second exemplary embodiment, the terminal assembly 1 has four terminals 10 (N=4) for transmitting a charging current, a housing element 11 and a temperature monitoring device 12. This terminal assembly of the second exemplary embodiment is suitable for a AC (Alternating Current) charging connector.

In the second exemplary embodiment, the temperature monitoring device 12 has a support element 120 and four thermal sensors 121 (M=4), mounted on a first surface 122 of the support element 120, for detecting a rise in temperature of the four respective terminals 10. The support element 120 can be formed by a printed circuit board. The printed circuit board 120 is made of an electrically insulating material and supports electrical conducting tracks (not represented).

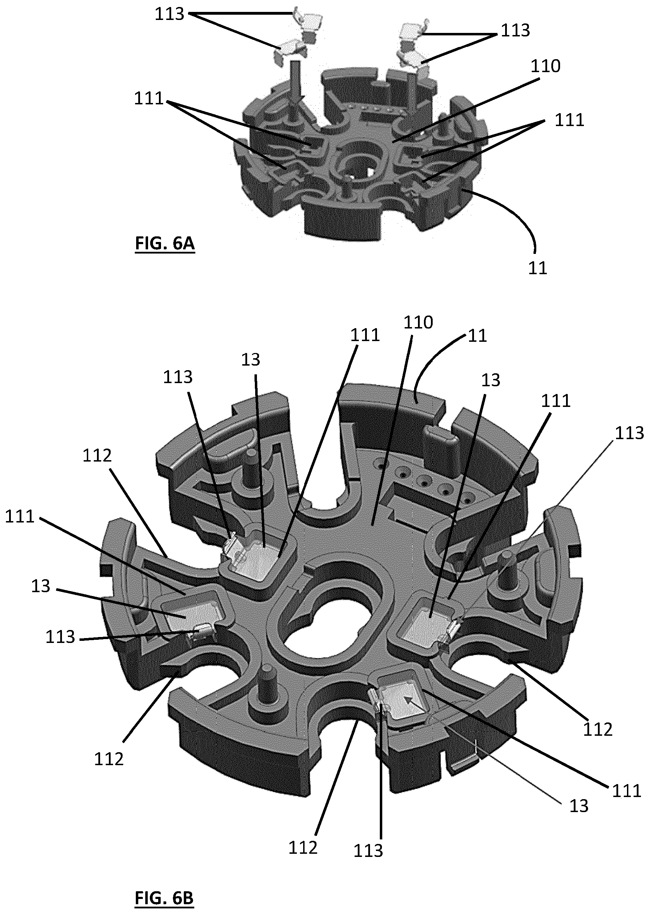

The housing element 11 holds the four terminals 10. It has for example an external shape of a flat cylinder, as shown in figures 6A and 6B. The housing element 11 can be made of a plastic material. The four terminals 10 are inserted and retained in four respective notches 112 provided in a circle edge of the housing element 11.

The four terminals 10 extend along four parallel axis, that are perpendicular to a plane through which the housing element 11 extends. The terminals 10 have for example a circular cross section. Each terminal 10 projects from the housing element 11 by means of a first end 10A and is held by the housing element 11 by means of a shank portion 10B that is next to a second end 10C, opposite to the first end 10A. The second end 10C is intended to make electrical contact with a conductor element of the charging connector integrating the terminal assembly 1. The first end 10A is intended to make electrical contact with a conductor element of a mating charging connector to which said charging connector is connected.

The housing element 11 has an insertion part 110, in which the temperature monitoring device 12 is inserted.

The housing element 11 has four holes 111, that can be viewed in figures 6A to 6C. These holes 111 are provided at the bottom of the insertion part 110. Each hole 111 is positioned next to a notch 112 for receiving a terminal 10 and communicates with the notch 112 through a corresponding opening.

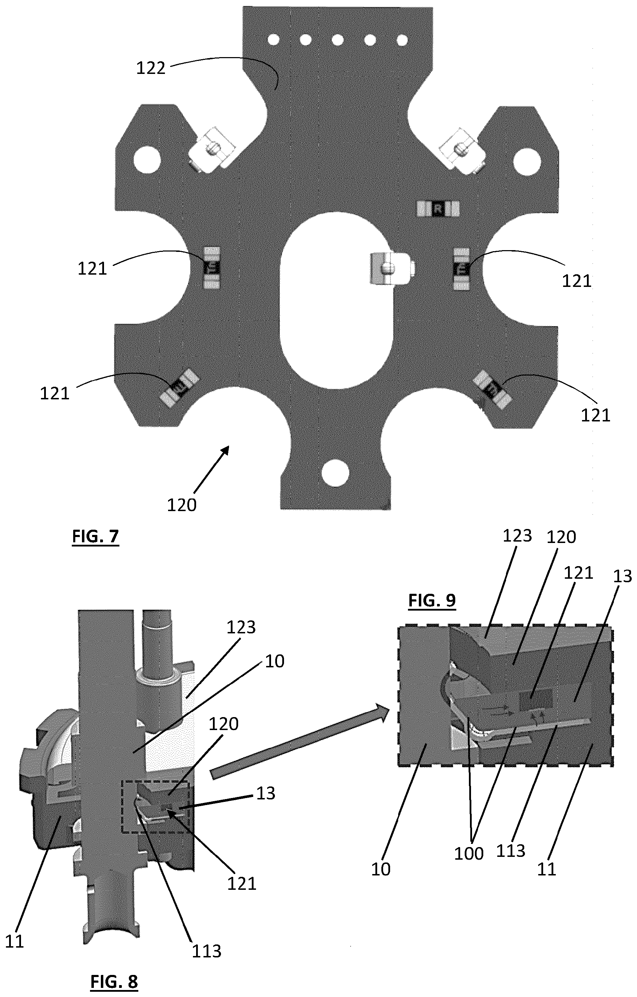

A lamella metal spring 113 is mounted into each hole 111. The lamella metal spring 113 has a body part that lies on a surface at the bottom of the hole 111. This body part is a sheet of metal having a shape that fits the bottom of the hole 111. The lamella metal spring 113 has two fixing leg parts, perpendicular to the body part, which are inserted into two respective slots provided at the bottom of the hole 111, for fixing the lamella metal spring 113 to the housing element 11. The lamella metal spring 113 has also an arm part that extends from the body part towards an end portion, through the opening between the hole 111 and the corresponding notch 112. This end portion of the spring arm part is in contact with the corresponding terminal 10, as can be viewed in figure 8. The lamella metal springs 113 are made of a metal material having a good thermal conductivity, for example a copper alloy.

A container is formed by the inner surface of each hole 111 in the housing element 11, the first surface of the support element 120, and a contact surface 100 of the lamella metal spring 113. As shown in figures 6B and 6C, the container defines a space (inside the container) that is filled with a thermal interface material 13. The body part of the lamella metal spring 113 is sandwiched between the thermal interface material 13 and the surface at the bottom of the hole 111.

The contact surface 100 of the lamella metal spring 113 corresponds to the surface area of the lamella metal spring 113 that is in contact with the thermal interface material 13. This contact surface extends over the body part of the lamella metal spring 113 (more precisely, over the surface of the body part that is oriented towards the inside of the hole) and at least partially over the arm part of the lamella metal spring 113.

The thermal sensor 121 is immersed in the thermal interface material 13, as shown in figures 8 and 9. It is advantageously disposed in front of the body part of the lamella metal spring.

Each thermal sensor 121 is thermally coupled with the corresponding terminal 10 by the thermal interface material 13 and the lamella metal spring 113. As represented in figure 9 by arrows, when the terminal 10 generates heat, the heat flow goes from the terminal 10 to the lamella metal spring 113 and then directly from the contact surface 100 of the arm part and the body part of the lamella metal spring 113 to the thermal sensor 121, through the thermal interface material 13.

Such a configuration allows an efficient and rapid transfer of heat from the terminals 10 to the associated thermal sensors 121, which allows a quick detection of an excessive rise in temperature of the terminals 10.

The terminal assembly 1 has also a protective cover 123 that is inserted in the insertion portion 110 of the housing element 11.

A second exemplary embodiment of the method for manufacturing the terminal assembly 1 according to the second exemplary embodiment will now be described with reference to figures 6A to 6E.

In a first step (figure 6A), the four lamella metal springs 113 are mounted onto the housing element 11. Each lamella metal spring 113 is put on the surface at the bottom of a hole 111 and its two fixing leg parts are inserted in the slots at the bottom of the hole 111. In this position, the arm part of the lamella metal spring extends upwards from the body part of the lamella metal spring lying on the bottom of the hole 111. The angle between the body part and the arm part of the lamella metal spring is slightly superior to 90°. In this way, the arm part of the lamella metal spring 113 extends through the opening between the hole 111 and the corresponding notch 112 for receiving a terminal 10.

In a second step (figure 6B), the thermal interface material 13 in liquid state is dispensed in each container formed by the inner surface of a hole 111 and the lamella metal spring 113 inserted into this hole 111. The thermal interface material 13 dispensed in the container covers a surface area 100 of the thermal interface material 113, referred as the contact surface of the lamella metal spring 113. This surface area comprises a top surface of the body part of the spring 113 and a partial surface of the arm part of the spring 113.

In a third step (figure 6C), when the thermal interface material 13 is still in liquid state, each thermal sensor 121 is immersed in the thermal interface material 13 by putting the support element 120, which first surface (the one supporting the thermal sensors 121) faces downwards, on a top surface of the liquid. More precisely, the support element 120 is inserted into the insertion part 110 and put on the bottom of said insertion part 110, so that the first surface of the support element 120 is put on the top surface of the liquid thermal interface material 13 previously dispensed in the containers. By doing so, the four thermal sensors 121, positioned appropriately on the first surface of the support element 120, are immersed in the dispensed liquid thermal interface material 13. The thermal sensors 121, immersed in the thermal interface material 13, face the body parts of the corresponding lamella metal springs 113.

In the third step, a plurality of fixing pins protruding on a surface at the bottom of the insertion part 110 are inserted into holes provided through the support element 120, in order to facilitate assembling the housing element 111 and the support element 120.

In a fourth step, the thermal interface material 13 is cured. For example, it is cured at room temperature or with the addition of heat.

After curing, the thermal interface material 13 allows to stably assemble the support element 120 with the housing element 11.

In a fifth step (figure 6D), a protective cover 123 is assembled to the first assembly of the housing element 11 and the support element 120, so as to form a second assembly.

In a sixth step (figure 6E), the terminals 10 are assembled with this second assembly, by inserting the terminals 10 in the notches 112. By doing so, the four terminals 10 are put into contact with the four lamella metal springs 113. Each terminal 10 pushes the arm part of the corresponding lamella metal spring 113 against the thermal interface material 13, which improves the contact between the lamella metal spring 113 and the thermal interface material 13.

## Claims

1. A terminal assembly (1) for a charging connector for a vehicle with an electric motor, comprising
- N terminals (10) for transmitting a charging current, with N≥2,
- a temperature monitoring device (12), comprising a support element (120) and N thermal sensors (121) for respectively monitoring the temperature of the N terminals (10), said N thermal sensors (121) being mounted on a first surface (122) of said support element (120);
- a housing element (11) holding the N terminals (10) and provided with N through holes (111) respectively for the N terminals (10);
**characterized in that** each of the N thermal sensors (121)
- is immersed in a thermal interface material (13) that fills a container provided by an inner surface of the corresponding through hole (111) of the housing element (11), the first surface (122) of the support element (120) and a contact surface (100) formed by a surface area (100) of the corresponding terminal (10) though said through hole (111),
- is disposed in front of and faces said contact surface (100) of the corresponding terminal (10), and
- is thermally coupled with said corresponding terminal (10) via said thermal interface material (13) and said contact surface (100; 113) so that heat generated by said corresponding terminal (10) is directly transferred from said contact surface (100) to said thermal sensor (121) through the thermal interface material;
wherein the thermal interface material fills N containers provided by the inner surface of the N respective through holes.

2. The terminal assembly according to claim 1, wherein the thermal interface material (13) filling said container comprises a first layer in contact with said corresponding contact surface (100) and a second layer in contact with the first surface (122) of the support element (120), and the inner surface of the hole (111) is configured so that the second layer is larger than the first layer.

3. The terminal assembly according to any of claims 1 and 2, **characterized in that** the thermal conductivity of the thermal interface material (13) is equal with or superior to 1 W / m-K.

4. A charging connector comprising the terminal assembly (1) according to any of claims 1 to 3.

5. An electric vehicle or a charging station integrating a charging connector according to claim 4.

6. Method for manufacturing a terminal assembly for a charging connector for a vehicle with an electric motor, comprising the steps of
- providing N terminals (10) for transmitting a charging current, with N≥2, and
- providing a temperature monitoring device (12) comprising a support element (120) and N thermal sensors (121) for respectively monitoring the temperature of the N terminals (10), said N thermal sensors (121) being mounted on a first surface (122) of said support element (120),
wherein the method comprises the steps of
- providing a housing element (11) having N through holes (111), for holding the N terminals,
- assembling the N terminals (10) and the housing element (11),
- dispensing a thermal interface material (13), in liquid state, in N containers provided by inner surfaces of the N through holes (111) of the housing element (11), and contact surfaces (100) formed by surface areas (100) of the N terminals (10) through the N respective through holes (111) of the housing element (11),
- when the thermal interface material (13) is still in liquid state, immersing the N thermal sensors (121) in the thermal interface material (13) by putting the support element (120), which first surface faces downwards, on a top surface of the liquid, the N thermal sensors (121) being disposed in front of and facing the respective contact surfaces (100) of the terminals (10);
- and then curing the thermal interface material (13).

## Patentansprüche

1. Eine Anschlussbaugruppe (1) für einen Ladestecker für ein Fahrzeug mit einem Elektromotor, umfassend
- N Anschlüsse (10) zum Übertragen eines Ladestroms, wobei N≥ 2 ist,
- eine Temperaturüberwachungsvorrichtung (12), die ein Trägerelement (120) und N Temperatursensoren (121) zur jeweiligen Überwachung der Temperatur der N Anschlüsse (10) umfasst, wobei die N Temperatursensoren (121) auf einer ersten Oberfläche (122) des Trägerelements (120) angebracht sind;
- ein Gehäuseelement (11), das die N Anschlüsse (10) hält und mit N Durchgangslöchern (111) für die N Anschlüsse (10) versehen ist;
**dadurch gekennzeichnet, dass** jeder der N Wärmesensoren (121)
- in ein Wärmeleitmaterial (13) eingetaucht ist, das einen Behälter ausfüllt, der durch eine Innenfläche der entsprechenden Durchgangsbohrung (111) des Gehäuseelements (11), die erste Fläche (122) des Trägerelements (120) und eine Kontaktfläche (100) gebildet wird, die durch einen Flächenbereich (100) des entsprechenden Anschlusses (10) durch die Durchgangsbohrung (111)
- vor der Kontaktfläche (100) des entsprechenden Anschlusses (10) angeordnet ist und dieser zugewandt ist, und
- über das thermische Schnittstellenmaterial (13) und die Kontaktfläche (100; 113) thermisch mit dem entsprechenden Anschluss (10) gekoppelt ist, so dass von dem entsprechenden Anschluss (10) erzeugte Wärme über das thermische Schnittstellenmaterial direkt von der Kontaktfläche (100) auf den Wärmesensor (121) übertragen wird;
wobei das thermische Schnittstellenmaterial N Behälter füllt, die durch die Innenfläche der N jeweiligen Durchgangslöcher bereitgestellt sind.

2. Anschlussbaugruppe nach Anspruch 1, wobei das thermische Schnittstellenmaterial (13), das den Behälter füllt, eine erste Schicht, die mit der entsprechenden Kontaktfläche (100) in Kontakt steht, und eine zweite Schicht, die mit der ersten Oberfläche (122) des Trägerelements (120) in Kontakt steht, umfasst, und die Innenfläche des Lochs (111) so konfiguriert ist, dass die zweite Schicht größer ist als die erste Schicht.

3. Anschlussbaugruppe nach einem der Ansprüche 1 und 2, **dadurch gekennzeichnet, dass** die Wärmeleitfähigkeit des thermischen Schnittstellenmaterials (13) gleich oder größer als 1 W/m-K ist.

4. Ladeanschluss, der die Anschlussbaugruppe (1) gemäß einem der Ansprüche 1 bis 3 umfasst.

5. Elektrofahrzeug oder Ladestation mit einem Ladestecker gemäß Anspruch 4.

6. Verfahren zur Herstellung einer Anschlussbaugruppe für einen Ladestecker für ein Fahrzeug mit einem Elektromotor, mit den folgenden Schritten
- Bereitstellen von N Anschlüssen (10) zum Übertragen eines Ladestroms, wobei N≥ 2 ist, und
- Bereitstellen einer Temperaturüberwachungsvorrichtung (12) mit einem Trägerelement (120) und N Temperatursensoren (121) zum jeweiligen Überwachen der Temperatur der N Anschlüsse (10), wobei die N Temperatursensoren (121) auf einer ersten Oberfläche (122) des Trägerelements (120) angebracht sind,
wobei das Verfahren die folgenden Schritte umfasst:
- Bereitstellen eines Gehäuseelements (11) mit N Durchgangslöchern (111) zum Halten der N Anschlüsse,
- Zusammenbau der N Anschlüsse (10) und des Gehäuseelements (11),
- Einbringen eines thermischen Schnittstellenmaterials (13) in flüssigem Zustand in N Behälter, die durch Innenflächen der N Durchgangslöcher (111) des Gehäuseelements (11) und Kontaktflächen (100) gebildet sind, die durch Oberflächenbereiche (100) der N Anschlüsse (10) durch die N jeweiligen Durchgangslöcher (111) des Gehäuseelements (11) gebildet sind,
- wenn sich das thermische Schnittstellenmaterial (13) noch in flüssigem Zustand befindet, Eintauchen der N thermischen Sensoren (121) in das thermische Schnittstellenmaterial (13), indem das Stützelement (120), dessen erste Oberfläche nach unten zeigt, auf eine Oberseite der Flüssigkeit gelegt wird, wobei die N thermischen Sensoren (121) vor den jeweiligen Kontaktflächen (100) der Anschlüsse angeordnet sind und diesen zugewandt sind (10) angeordnet sind;
- und anschließendes Aushärten des thermischen Schnittstellenmaterials (13).

## Revendications

1. Ensemble de bornes (1) pour un connecteur de charge pour un véhicule à moteur électrique, comprenant
- N bornes (10) pour transmettre un courant de charge, avec N≥ 2,
- un dispositif de surveillance de la température (12), comprenant un élément de support (120) et N capteurs thermiques (121) pour surveiller respectivement la température des N bornes (10), lesdits N capteurs thermiques (121) étant montés sur une première surface (122) dudit élément de support (120) ;
- un élément de boîtier (11) contenant les N bornes (10) et pourvu de N trous traversants (111) respectivement pour les N bornes (10) ;
**caractérisé en ce que** chacun des N capteurs thermiques (121)
- est immergé dans un matériau d'interface thermique (13) qui remplit un récipient formé par une surface intérieure du trou traversant correspondant (111) de l'élément de boîtier (11), la première surface (122) de l'élément de support (120) et une surface de contact (100) formée par une zone de surface (100) de la borne correspondante (10) à travers ledit trou traversant (111),
- est disposé devant et fait face à ladite surface de contact (100) de la borne correspondante (10), et
- est couplé thermiquement avec ladite borne correspondante (10) via ledit matériau d'interface thermique (13) et ladite surface de contact (100 ; 113) de sorte que la chaleur générée par ladite borne correspondante (10) est directement transférée de ladite surface de contact (100) audit capteur thermique (121) à travers le matériau d'interface thermique ;
dans lequel le matériau d'interface thermique remplit N récipients prévus par la surface intérieure des N trous traversants respectifs.

2. Ensemble de bornes selon la revendication 1, dans lequel le matériau d'interface thermique (13) remplissant ledit récipient comprend une première couche en contact avec ladite surface de contact correspondante (100) et une deuxième couche en contact avec la première surface (122) de l'élément de support (120), et la surface intérieure du trou (111) est configurée de telle sorte que la deuxième couche est plus grande que la première couche.

3. L'ensemble terminal selon l'une quelconque des revendications 1 et 2, **caractérisé en ce que** la conductivité thermique du matériau d'interface thermique (13) est égale ou supérieure à 1 W/m-K.

4. Connecteur de charge comprenant l'ensemble de bornes (1) selon l'une quelconque des revendications 1 à 3.

5. Véhicule électrique ou station de charge intégrant un connecteur de charge selon la revendication 4.

6. Procédé de fabrication d'un ensemble de bornes pour un connecteur de charge pour un véhicule à moteur électrique, comprenant les étapes consistant à
- fournir N bornes (10) pour transmettre un courant de charge, avec N≥ 2, et
- fournir un dispositif de surveillance de la température (12) comprenant un élément de support (120) et N capteurs thermiques (121) pour surveiller respectivement la température des N bornes (10), lesdits N capteurs thermiques (121) étant montés sur une première surface (122) dudit élément de support (120),
dans lequel le procédé comprend les étapes consistant à
- fournir un élément de boîtier (11) comportant N trous traversants (111) pour maintenir les N bornes,
- assembler les N bornes (10) et l'élément de boîtier (11),
- distribuer un matériau d'interface thermique (13), à l'état liquide, dans N récipients prévus par les surfaces intérieures des N trous traversants (111) de l'élément de boîtier (11), et les surfaces de contact (100) formées par les zones de surface (100) des N bornes (10) à travers les N trous traversants respectifs (111) de l'élément de boîtier (11),
- lorsque le matériau d'interface thermique (13) est encore à l'état liquide, immerger les N capteurs thermiques (121) dans le matériau d'interface thermique (13) en plaçant l'élément de support (120), dont la première surface est tournée vers le bas, sur une surface supérieure du liquide, les N capteurs thermiques (121) étant disposés devant et en face des surfaces de contact respectives (100) des bornes (10) ;
- puis durcir le matériau d'interface thermique (13).
